(19) Europäisches Patentamt
European Patent Office
Office européen des brevets

(11) EP 3 273 186 B1

(12) EUROPEAN PATENT SPECIFICATION

(45) Date of publication and mention of the grant of the patent:
**06.03.2024 Bulletin 2024/10**

(21) Application number: **17181962.6**

(22) Date of filing: **18.07.2017**

(51) International Patent Classification (IPC):
***F25B 41/00*** *(2021.01)*

(52) Cooperative Patent Classification (CPC):
**F16K 31/04; F25B 41/35;** Y02B 30/70

# (54) MOTOR-OPERATED VALVE

MOTORBETRIEBENES VENTIL

VANNE MOTORISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2016 JP 2016141423**

(43) Date of publication of application:
**24.01.2018 Bulletin 2018/04**

(73) Proprietor: **Saginomiya Seisakusho, Inc.**
**Tokyo 165-0033 (JP)**

(72) Inventors:
- **Kitami, Yuki**
  **Sayama-shi, Saitama 3501395 (JP)**
- **Ishiguro, Motoyasu**
  **Sayama-shi, Saitama 3501395 (JP)**
- **Tanabe, Tamami**
  **Sayama-shi, Saitama 3501395 (JP)**

(74) Representative: **Dehns**
**St. Bride's House**
**10 Salisbury Square**
**London EC4Y 8JD (GB)**

(56) References cited:
**EP-A1- 3 018 391**
**WO-A1-93/25832**
**JP-B2- 4 541 366**
**US-A1- 2013 206 851**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 273 186 B1

## Description

### Technical Field

The present invention relates to a motor-operated valve used for refrigeration cycle or the like.

### Background Art

Conventionally, fluid control valves used for large-sized package air conditioners and refrigerators are known (see, for example, Patent Document 1). From a background such as rationalization of control equipment such as combining a plurality of motor-operated valves used for flow control into one, such a fluid control valve is desired to have a performance capable of exhibiting favorable operability even when the valve has a large diameter and high pressure difference occurs. The flow control in a relatively large diameter valve requires a large driving force to actuate the valve element because a load on the valve element generated by a pressure difference is large compared to a thrust of a screw generated by a torque of a magnet.

Accordingly, in order to improve the operability of such a valve element, a pressure balance mechanism as described below is employed. For example, in a fluid control valve 101 shown in Fig. 8, a valve element 120 slidably contacts the inner peripheral surface of a valve element guide member 172 is provided with a sealing member 137 to define a back pressure chamber 129 above a valve chamber 107, and a pressure is introduced in a valve port 119 into the back pressure chamber 129 via a conducting passage 124 provided in the valve element 120 to utilize a pressure (back pressure) in the back pressure chamber 129, thereby canceling a force due to the pressure difference between a pushing-down force (force acting in the valve-closing direction) and a pushing-up force (force acting in the valve-opening direction) acting on the valve element 120 in a valve-closed state to reduce the load on the valve element 120.

### Related Art Document

### Patent Document

Patent Document 1 JP 2016-80115A

### Summary of Invention

### Technical Problem

Incidentally, in the fluid control valve 101 adopting a pressure balance mechanism as described above, there was a problem that a screw backlash h (see Fig. 9) between a male screw 132a formed on a valve shaft 132 and a female screw 134a formed on a valve holder 134 appears as a hysteresis (see Fig. 10) in the flow characteristics. Hereinafter, such a hysteresis will be described in detail.

For example, in the case of a fluid control valve (not shown) not employing a pressure balance mechanism, a valve shaft connected to a valve element is constantly pressed in one direction by a differential pressure. For this reason, a contact surface between the thread of a male screw formed on a valve shaft and the thread of a female screw formed on a valve holder is always constant, and even when the operating direction of the valve element is switched from the valve-opening direction to the valve-closing direction or vice versa, no screw backlash will be caused. Therefore, no hysteresis occurs in the flow characteristics when the operating direction of the valve element switches.

However, in the case of the fluid control valve 101 employing a pressure balance mechanism, since a force due to the pressure acting on the valve element 120 is canceled by the pressure balance mechanism, a screw backlash is caused between the male screw 132a and the female screw 134a. For example, when the valve element 120 is moved in the valve-closing direction, as shown in Fig. 9 (a), the upper surface of the thread of the male screw 132a comes into contact with the lower surface of the thread of the female screw 134 a, and when the valve element 120 is moved in the valve-opening direction, as shown in Fig. 9 (b), the lower surface of the thread of the male screw 132a comes into contact with the upper surface of the thread of the female screw 134a.

Fig. 10 is a graph showing the flow characteristics (the relationship of the change in the flow rate with respect to the application amount of pulses) of the fluid control valve 101. In Fig. 10, the horizontal axis of the graph represents the applied amount of pulses to be applied to a stepping motor, and the vertical axis of the graph represents the flow rate.

As shown in Fig. 10, in order to switch from a valve-open state to a valve-closed state, it is needed that the application amount of pulses is first lowered to move the valve shaft 132 upward by the screw backlash h, and then, the contact surfaces of the threads are switched in such a way that the upper surface of the thread of the male screw 132a comes into contact with the lower surface of the thread of the female screw 134a (see Fig. 9 (a)). However, since the valve element 120 does not move even when the valve shaft 132 rotates during this time, the flow rate of a fluid does not change, and a hysteresis corresponding to the screw backlash h occurs in the flow characteristics. For this reason, in the conventional fluid control valve 101, there has been a problem that a deviation occurs between a target flow rate and an actual flow rate after switching the moving direction of the valve element 120.

An object of the preferred embodiment of the present invention is to provide a motor-operated valve having high-precision flow controllability.

US 2013/206851 A1 discloses features according to the preamble of claim 1.

Solution to Problem

The motor-operatedvalve according to the present invention is a motor-operated valve as defined in claim 1. It comprises a cylindrical cup-shaped casing made of a non-magnetic material; a valve body having a valve chamber therein integrally connected to a lower side of an opening side of the casing; a valve seat member having a valve port, wherein the valve seat member is incorporated in a lower inner side of the valve body; a first pipe fitting configured to communicate with the valve chamber and fixedly attached to the valve body; a second pipe fitting configured to communicate with the valve chamber via the valve port and fixedly attached to the valve seat member; a rotatable rotor housed in an inner periphery of the casing; a valve shaft arranged in a shaft core portion of the rotor, the valve shaft being coupled to the rotor by a bush member, wherein the valve shaft is configured to move integrally with the rotor in the vertical direction while rotating, and wherein a male screw is formed on an outer peripheral surface of the valve shaft; a valve shaft holder that is fixed, below the bush member, in a non-rotatable manner relatively to the valve body, wherein a female screw is formed on the inner periphery of the valve shaft holder, and threads with the male screw; a valve element that moves in the axial direction based on linear motion of the valve shaft; a valve element guide member configured to guide the movement of the valve element in the axial direction, wherein the valve element guide member is arranged inside the valve body; a sealing member interposed between the valve element and the valve element guide member; characterized in that the motor-operated valve further comprises: a back pressure chamber provided above the valve element and to which pressure in the valve port is introduced via the equalizing passages formed in the valve element, the equalizing passages comprising a longitudinal hole portion and a transverse conducting hole; and an urging spring for urging the valve shaft in an axial direction such that a surface of one side of a thread of the male screw formed on the outer periphery of the valve shaft urged by the urging spring is in contact with a surface on the other side of a thread of the female screw formed on the inner periphery of the valve shaft holder, wherein the urging spring is supported by the valve shaft holder and the valve element such that the urging spring urges the valve element in a direction to separate it from the valve holder, said direction being a valve-closing direction for pushing the valve element towards the valve port.

According to this, no screw backlash is caused when the operating direction of the valve element is switched, and a hysteresis can be prevented from occurring in the flow characteristics when the operating direction of the valve element is switched, and therefore, a motor-operated valve having high-precision flow controllability can be provided.

In an embodiment of the motor-operated valve of the present invention

the urging spring urges the male screw member in the valve-closing direction of the valve element, and
the surface of the thread formed on the valve shaft urged by the urging spring on the valve port side is in contact with the surface of the thread formed on the valve shaft holder opposite to the valve port.

As a result, the lower surface of the thread of the male screw is pressed against the upper surface of the thread of the female screw, whereby screw backlash is prevented to be caused.

In an embodiment of the motor-operated valve of the present invention:
the spring load of the urging spring is larger than the seal sliding resistance generated between the sealing member and the inner peripheral surface of the valve element guide member.

As a result, the lower surface of the thread of the male screw is pressed against the upper surface of the thread of the female screw, and occurrence of hysteresis corresponding to screw backlash in flow characteristics can be precisely prevented when the operating direction of the valve element is changed.

In an embodiment of the motor-operated valve of the present invention
the spring load of the urging spring when the valve element is closed is larger than the sum of the seal sliding resistance and a force due to a fluid acting on the valve element.

As a result, the lower surface of the thread of the male screw can be precisely pressed against the upper surface of the thread of the female screw.

In an embodiment of the present invention
the spring load of the urging spring when the valve element is fully opened is smaller than the driving thrust driving the valve shaft by the rotational motion of the rotor.

As a result, the contact surface of the thread of the male screw and the thread of the female screw can be kept constant without changing the driving force of a stepping motor even when the urging spring is contracted and the pushing-down force becomes the strongest.

An embodiment of the motor-operated valve of the present invention further comprises an intermediate member which does not transmit the rotation of the valve shaft due to the rotational motion of the rotor to the urging spring.

As a result, the transmission of the rotation of the valve shaft to the urging spring to twist the urging spring is prevented, and therefore, the valve element can be accurately operated without causing a hysteresis in the flow characteristics.

In an embodiment of the motor-operated valve of the present invention the urging spring is arranged at a position where one end portion is in contact with the valve element and the other end portion is in contact with the valve shaft holder.

In this case, by urging the valve element in the valve-closing direction by the urging spring, the valve shaft can be pressed downward via a valve guide fixed to the valve element.

An embodiment of the motor-operated valve of the present invention further comprises

a valve guide fixed to the valve element and having a through hole for inserting the valve shaft in a loosely penetrated state as the intermediate member, wherein
the urging spring is arranged at a position where one end is in contact with the valve guide and the other end is in contact with the valve shaft holder.

In this case, the valve shaft can be pressed downward without providing a flange for attaching the valve guide to the valve element.

In an embodiment of the motor-operated valve of the present invention the urging spring is arranged at a position where one end urges the valve shaft via the intermediate member and the other end contacts the top surface of a casing which covers the rotor.

In this case, since the urging spring is arranged in a cylindrical portion, the urging spring can be easily incorporated into the motor-operated valve when the motor-operated valve is assembled.

In an embodiment of the motor-operated valve of the present invention the sealing member is formed using an annular packing having an L-shaped cross section.

In an embodiment of the motor-operated valve of the present invention the sealing member is formed by combining an O-ring and an annular packing having a C-shaped cross section. Advantageous Effects of Invention

According to the present invention, a motor-operated valve having highly precise flow controllability can be provided. Brief Description of Drawings

Fig. 1 is a schematic cross-sectional view of a motor-operated valve according to an embodiment of the present invention.
Fig. 2 is an enlarged view of a screw thread engagement portion of the motor-operated valve according to the embodiment.
Fig. 3 is a graph showing flow characteristics of the motor-operated valve according to the embodiment.
Fig. 4 is a schematic cross-sectional view in cases in which an urging spring is arranged in a through hole of a valve shaft holder in the motor-operated valve according to the embodiment.
Fig. 5 is a schematic cross-sectional view of the motor-operated valve according to the embodiment in cases in which the urging spring is arranged in a cylindrical portion.
Fig. 6 is a schematic cross-sectional view of cases in which a composite sealing material is used for a sealing member in the motor-operated valve according to the embodiment.
Fig. 7 is a schematic cross-sectional view in the case of using a composite sealing material adopting a configuration in which an annular packing is arranged inside an O-ring in the motor-operated valve according to the embodiment.
Fig. 8 is a schematic cross-sectional view of a conventional fluid control valve.
Fig. 9 is an enlarged view of a screw thread engagement portion of a conventional fluid control valve.
Fig. 10 is a graph showing flow characteristics of a conventional fluid control valve.

Description of Embodiments

Hereinafter, a motor-operated valve according to an embodiment of the present invention will be described with reference to the drawings, which illustrate the embodiment by way of illustrative example only. Fig. 1 is a schematic cross-sectional view showing a motor-operated valve 2 according to an embodiment of the present invention. In the present specification, "above" or "below" is defined in the state of Fig. 1. Specifically, a rotor 4 is located above a valve element 17.

In a motor-operated valve 2, a valve body 30 is integrally connected by welding or the like to a lower side of an opening side of a cylindrical cup-shaped casing 60 made of a nonmagnetic material.

Here, the valve body 30 is a press molded product produced by pressing a metal material such as a stainless steel plate, and has a valve chamber 11 therein. A first pipe fitting 12 made of stainless steel or copper directly communicating with a valve chamber 11 is fixedly attached to the valve body 30. In addition, a valve seat member 30A having a valve port 16 having a circular cross section is incorporated in a lower inner side of the valve body 30. A second pipe fitting 15 made of stainless steel or copper communicating with the valve chamber 11 via the valve port 16 is fixedly attached to the valve seat member 30A.

A rotatable rotor 4 is housed in the inner periphery of the casing 60, and a valve shaft 41 is arranged in a shaft core portion of the rotor 4 via a bush member 33. The valve shaft 41 and the rotor 4 coupled by the bush member 33 integrally move in the vertical direction while rotating. A male screw 41a is formed on the outer peripheral surface of the valve shaft 41 near the intermediate portion. In the present embodiment, the valve shaft 41 functions as a male screw member.

A stator including a yoke, a bobbin, a coil, and the like (not shown) is arranged on the outer periphery of the casing 60, and the rotor 4 and the stator constitute a stepping motor.

A guide support 52 is fixed to a ceiling surface of the casing 60. The guide support 52 has a cylindrical portion 53 and an umbrella-shaped portion 54 formed on the upper end side of the cylindrical portion 53, and the whole of the support is integrally molded by pressing. The umbrella-shaped portion 54 is formed to have substantially the same shape as the inside of the top portion of the casing 60.

A cylindrical member 65 also serving as a guide for the valve shaft 41 is fitted in the cylindrical portion 53 of the guide support 52. The cylindrical member 65 is made of a metal, a material of a synthetic resin containing a lubricant, or a member subjected to a surface treatment, and rotatably holds the valve shaft 41.

A valve shaft holder 6 constituting a screw threading A with the valve shaft 41 and having a function of suppressing an inclination of the valve shaft 41 as will be described below is fixed in a non-rotatable manner relatively to the valve body 30 below the bush member 33 of the valve shaft 41.

The valve shaft holder 6 is a member composed of a cylindrical small diameter portion 6a on the upper side, a cylindrical large diameter portion 6b on the lower side, a fitting portion 6c housed on the inner peripheral side of the valve body 30, and a flange portion 6f projecting from the fitting portion 6c. The flange portion 6f of the valve shaft holder 6 is fixed by welding or the like between the upper surface of the flange portion 72c of the valve element guide member 72 and the casing 60. A through hole 6h is formed inside the valve shaft holder 6. On the inner peripheral surface of the valve shaft holder 6, an annular step 6j in contact with the upper end of an urging spring 7 described below is formed between the lower end of the cylindrical large diameter portion 6b and the upper end of the fitting portion 6c. Due to this step 6j, the inner diameter of the cylindrical large diameter portion 6b is smaller than the inner diameter of the fitting portion 6c.

A female screw 6d is formed downward from an upper opening 6g of the cylindrical small diameter portion 6a of the valve shaft holder 6 to a predetermined depth. Therefore, in the present embodiment, the valve shaft holder 6 functions as a female screw member. A screw thread A shown in Fig. 1 is constituted by a male screw 41a formed on the outer periphery of the valve shaft 41 and a female screw 6d formed on the inner periphery of the cylindrical small diameter portion 6a of the valve shaft holder 6.

A pressure equalizing hole 51 is drilled in the side surface of the cylindrical large diameter portion 6b of the valve shaft holder 6, and as shown in Fig. 1, a valve shaft holder chamber 83 in the cylindrical large diameter portion 6b and a rotor housing chamber 67 (second back pressure chamber) communicate with each other through the pressure equalizing hole 51. By thus providing the pressure equalizing hole 51 to communicate a space housing the rotor 4 of the casing 60 with a space in the valve shaft holder 6, the valve guide 18 can be moved smoothly.

Below the valve shaft 41, a cylindrical valve guide 18 is slidably arranged with respect to the through hole 6h of the valve shaft holder 6. A ceiling portion 21 side of the valve guide 18 is bent substantially at a right angle by press molding. A through hole 18a is formed in the ceiling portion 21. Below the valve shaft 41, a flange portion 41b is further formed.

Here, the valve shaft 41 is inserted into the through hole 18a of the valve guide 18 in a loosely penetrated state so as to be rotatable with respect to the valve guide 18 and displaceable in the radial direction, and the flange portion 41b is arranged in the valve guide 18 so as to be rotatable with respect to the valve guide 18 and displaceable in the radial direction. The valve shaft 41 is inserted through the through hole 18a, and the upper surface 41c of the flange portion 41b is arranged so as to face the ceiling portion 21 of the valve guide 18. Since the flange portion 41b is larger in diameter than the through hole 18a of the valve guide 18, the valve shaft 41 is prevented from falling off.

Since the valve shaft 41 and the valve guide 18 are movable in the radial direction from each other, coaxiality with the valve guide 18 and the valve element 17 can be obtained without requiring a very high coaxial mounting accuracy with respect to the arrangement position of the valve shaft holder 6 and the valve shaft 41.

Between the ceiling portion 21 of the valve guide 18 and the flange portion 41b of the valve shaft 41, a washer 70 having a through hole formed in its central portion is provided. The washer 70 is preferably a high-lubricity surface metal washer, a high-lubricity resin washer such as one made of fluororesin, or a high-lubricity resin-coated metal washer.

A compressed valve spring 27 and a spring bearing 35 are further housed in the valve guide 18.

A valve element guide member 72 for guiding the movement of the valve element 17 in the axial direction is arranged inside the valve body 30, and a sealing member 48 is interposed between the valve element 17 and the valve element guide member 72.

Here, in the valve element 17, a longitudinal hole portion 17b and a transverse conducting hole 17c are formed as pressure equalizing passages. The pressure of the valve port 16 (inside the second pipe fitting 15) is guided to the back pressure chamber 28 via the hole portion 17b and the conducting hole 17c which are equalizing passages.

The valve element guide member 72 is a cylindrical body whose inside is penetrated and comprises a flange portion 72c located at the highest position, a large diameter portion 72a located under the flange portion 72c, and a small diameter portion 72b thereunder, and is formed by press molding a metal material such as a stainless steel plate. The diameter of the outer peripheral surface side of the large diameter portion 72a of the valve element guide member 72 is formed to be slightly larger than the diameter of the inner peripheral surface side of the valve body 30. Therefore, when the valve body guide member 72 is press-fitted into the valve body 30, the large diameter portion 72a of the valve element guide member 72 can be tightly locked to the inner peripheral surface of the valve body 30, thereby preventing the valve element guide member 72 from moving with respect to the valve body 30.

The valve element 17 is composed of a valve element portion 17A, a valve element holding portion 17B, and the sealing member 48, and the valve element 17 is arranged so that the axis of the valve element 17 overlaps the axial center of the motor-operated valve 2.

The valve element portion 17A is a substantially cylindrical member having a substantially columnar space 17a therein, and in a valve-closed state, the lower end portion 17A1 is seated on the valve seat member 30A.

The valve element holding portion 17B includes a flange 17f that is in contact with the lower end of the urging spring 7 and supports the urging spring 7, and an annular projection surface 17g that supports the lower end of the valve guide 18. Here, the lower end of the valve guide 18 is fixed to the annular projection surface 17g by welding. In the valve element holding portion 17B, a longitudinal hole portion 17b and a transverse conducting hole 17c are formed as pressure equalizing passages, respectively, and the pressure of the valve port 16 (inside the second pipe fitting 15) is guided to the back pressure chamber 28 via the hole portion 17b and the conducting hole 17c which are equalizing passages.

The sealing member 48 is an annular member formed by sandwiching an annular reinforcing plate 48b between annular packings 48a having an L-shaped cross section. On the sealing member 48, preferably, leaf springs which constantly urge the annular packings 48a outward respectively are arranged on the upper side of the annular packing 48a arranged above and on the lower side of the annular packing 48a arranged below.

The urging spring 7 is arranged in a substantially cylindrical gap formed between the valve guide 18, the valve element 17 and the valve shaft holder 6, the valve element guide member 72, and is supported by a step 6j formed on the inner peripheral surface of the valve shaft holder 6 and a flange 17f formed on the valve element 17. The urging spring 7 functions as a so-called compression spring, and the urging spring 7 urges the valve shaft holder 6 in a direction to separate the valve element 17 from each other, that is, in a valve-closing direction for pushing down the valve element 17 toward the valve port 16 side.

Therefore, when the valve element 17 is pushed down toward the valve port 16 side via the flange 17f, the valve guide 18 fixed to the annular projection surface 17g is pulled downward. Next, the flange portion 41b of the valve shaft 41 is pushed down by the ceiling portion 21 via the washer 70, and the entire valve shaft 41 is pushed downward. As a result, in screw thread engagement A, as shown in Fig. 2, the lower surface (the surface on the valve port 16 side) of the screw thread of the male screw 41a formed on the outer peripheral surface of the valve shaft 41 is pressed against the upper surface (the surface opposite to the valve port 16) of the thread of the female screw 6d formed on the inner circumference of the cylindrical small diameter portion 6a of the valve shaft holder 6. As described above, the valve shaft 41 is rotatably arranged with respect to the valve guide 18. Therefore, the valve guide 18 functions as an intermediate member for preventing the rotation of the valve shaft 41 from being transmitted to the urging spring 7, and the urging spring 7 is not twisted.

Here, Fig. 3 is a graph showing flow characteristics (relationship of change in flow rate with respect to an application amount of pulses) of the motor-operated valve 2. In Fig. 3, the horizontal axis of the graph represents the application amount of pulses to be applied to a stepping motor, and the vertical axis of the graph represents the flow rate. As described above, when the lower surface of the thread of the male screw 41a is pressed against the upper surface of the thread of the female screw 6d, no screw backlash is caused even when the operating direction of the valve element 17 is switched. Therefore, no hysteresis (see Fig. 9) occurs in the flow characteristics, and as shown in Fig. 3, the flow characteristics when the valve element 17 is operated in the valve-closing direction and the flow characteristics when the valve element 17 is operated in the valve-opening direction are made to coincide.

In the motor-operated valve 2, the spring load (F kset) in the valve-closed state and the spring load (F kmax) in the valve-fully-opened state are designed to satisfy the following Formulae 1 and 2.

$$F\ kset\ ([N]) > f([N]) + \Delta S([m^2]) \times |P2 - P1|([N/m^2]) \ \ldots$$

Formula 1

$$F\ kmax\ ([N]) < F\ operation\ ([N]) \quad \ldots \text{ Formula 2}$$

Here, in Formula 1, f represents a force due to the sliding resistance of the sealing member between the sealing member 48 and the inner peripheral surface of the valve element guide member 72 (hereinafter, referred to as seal sliding resistance). ΔS represents the area difference between an annular flat surface (not shown) having the seal diameter X (see Fig. 1) as the outer diameter of the sealing member 48 as a contour and an annular flat surface (not shown) having the seating diameter Y (see Fig. 1) which is the outer diameter of the lower end portion 17A1 of the valve element 17 as a contour. P1 represents the pressure of a fluid on the inlet side in the valve-closed state and P2 represents the pressure of a fluid on the outlet side in the valve-closed state. Therefore, $\Delta S \times |P2 - P1|$ represents the force due to a fluid acting on the valve element 17.

The pressure (P1) of a fluid on the inlet side represents the pressure in the first pipe fitting 12 and the pressure in the valve chamber 11 when the fluid is introduced from the first pipe fitting 12 and discharged to the second pipe fitting 15 (hereinafter, referred to as positive direction), and represents the pressure in the valve port 16 and the pressure in the back pressure chamber 28 when the fluid is introduced from the second pipe fitting 15 and discharged to the first pipe fitting 12 (hereinafter, referred to as reverse direction). Here, the inside of the valve port 16 and the inside of the back pressure chamber 28 communicate with each other via the hole portion 17b and the conducting hole 17c which are pressure equalizing passages provided in the valve element 17.

On the other hand, the pressure (P2) of a fluid on the outlet side represents the pressure in the valve port 16 and the back pressure chamber 28 when the fluid flows in the positive direction, and represents the pressure in the first pipe fitting 12 and the valve chamber 11 when the fluid flows in the reverse direction.

As described above, by setting the spring load (F kset) in the valve-closed state to be larger than the sum of the seal sliding resistance between the sealing member 48 and the valve element guide member 72 in the valve-closed state and the force due to a fluid acting on the valve element 17, the lower surface of the thread of the male screw 41a can be pressed against the upper surface of the thread of the female screw 6d. Accordingly, occurrence of hysteresis corresponding to screw backlash in the flow characteristics when the operating direction of the valve element 17 is switched can be precisely prevented.

Preferably, the motor-operated valve 2 is designed with a margin in such a way that the entire right side of Formula 1 is multiplied by a constant of about 1.05 to 1.2 to weight the whole of the right side, whereby the spring load (F kset) in the valve-closed state becomes large.

For example,

$$F\ kset > (1.05\text{–}1.2) \times [f + \Delta S \times |P2 - P1|] \quad \ldots \text{ Formula}$$

1'

is preferable. As a result, the lower surface of the thread of the male screw 41a can be more reliably pressed against the upper surface of the thread of the female screw 6d.

In Formula 2, F operation represents driving thrust when the valve shaft 41 (male screw member) is driven by the rotational motion of the rotor 4. The spring load (F kmax) in the valve-fully-opened state is the spring load when the urging spring 7 is contracted and the pushing-down force becomes the strongest. Basically, when the spring load of the urging spring 7 is too large, the driving force of the stepping motor (that is, the driving force of the valve element 17) needs to be increased, for example, by making the magnets of the rotor 4 strong. However, by setting the spring load (F kmax) in the valve-fully-opened state to be smaller than the driving thrust of the valve shaft 41 as in Formula 2, the contact surfaces of the threads of the male screw 41a and the female screw 6d can be always kept constant without changing the driving force of the stepping motor.

According to the invention of this embodiment, by pushing the valve element 17 downward by the urging spring 7, the contact surface of the thread of the male screw 41a and the female screw 6d can be kept constant. Therefore, no screw backlash is caused when the operating direction of the valve element 17 is switched, and a hysteresis can be prevented from occurring in the flow characteristics when the operating direction of the valve element 17 is switched, thereby providing a motor-operated valve having high-precision flow controllability. By pushing the valve element 17 downward by the urging spring 7, the valve element 17 can be reliably seated on the valve seat member 30A in the valve-closed state, thereby precisely preventing a valve leakage. The transmission of the rotation of the valve shaft 41 to the urging spring 7 to twist the urging spring 7 is prevented, and therefore, the valve element 17 can be accurately operated without causing a hysteresis in the flow characteristics.

In the above-described embodiment, the position at which the urging spring 7 is arranged does not need to be the position shown in Fig. 1 as long as the contact surface of the thread can be maintained at a constant surface and the rotation of the valve shaft 41 is not transmitted to the urging spring 7. For example, as shown in Fig. 4, the urging spring 7 may be arranged in the through hole 6h. In this case, the upper end of the urging spring 7 is in contact with the bottom surface of the cylindrical small diameter portion 6a of the valve shaft holder 6, and the lower end of the urging spring 7 is in contact with the ceiling portion 21 of the valve guide 18 (intermediate member).

As shown in Fig. 5, the urging spring 7 may be arranged in the cylindrical portion 53 and the spring bearing 93 may be arranged between the urging spring 7 and the upper end portion of the valve shaft 41 in the cylindrical portion 53. In this case, the upper end of the urging spring 7 is in contact with the top surface of the umbrella-shaped portion 54, and the lower end of the urging spring 7 is in contact with the spring bearing 93. In this case, the spring bearing 93 functions as an intermediate member for preventing the rotation of the valve shaft 41 from being transmitted to the urging spring 7.

In the embodiment described above, a composite sealing material combining an annular packing (so-called O-ring) 48d having a substantially circular cross section and an annular packing 48f having a C-shaped cross section made of a high lubricating resin material such as PTFE may be employed for the sealing member 48 as shown in Figs 6 and 7. Here, as shown in Fig. 6, when a configuration in which the sealing member 48 is fixed to the valve element 17 and the annular packing 48f is arranged outside the O-ring 48d is employed, the outer diameter of the annular packing 48f is the seal diameter X and the outer periphery of the annular packing 48f slides on the inner peripheral side of the valve element guide member 72.

On the other hand, as shown in Fig. 7, when a configuration in which the sealing member 48 is not fixed to the valve element 17 and the annular packing 48f is arranged inside the O-ring 48d is employed, the valve body 17 slides inside the annular packing 48f. In this case, since the inner diameter of the annular packing 48f, that is, the outer diameter of the valve element 17 is the seal diameter X, the error of the area difference $\Delta S$ determined by the seal diameter X and the seating diameter Y described above can be reduced and the tolerance of the differential pressure occurring in the motor-operated valve 2 can be to reduced.

Even in the case of using the sealing member 48 formed by sandwiching the annular reinforcing plate 48b between the annular packing 48a having an L-shaped cross section as in the above-described embodiment, when the valve element 17 slides inside the annular packing 48a, the error of the area difference $\Delta S$ can be reduced.

In Formula 1 of the above embodiment, in consideration of the area difference, the force due to a fluid acting on the valve element 17 caused by the area difference is expressed as $\Delta S \times |P2 - P1|$, and the spring load (F kset) in the valve-closed state is expressed relatively large. Even when the area difference is "zero", that is, even when the force due to the fluid acting on the valve element 17 is canceled out, the contact surface of the thread of the male screw 41a and the thread of the female screw 6d can be kept constant. Specifically, as shown in Formula 1' ', it is sufficient for the spring load (F kset) in the valve-closed state to be at least larger than the seal sliding resistance (f) .

$$F\ kset > f \quad \ldots \text{ Formula 1''}$$

In the above-described embodiment, the case in which the urging spring 7 urges the valve shaft 41 in the valve-closing direction is described as an example, and the urging spring 7 may urge the valve shaft 41 in the valve-opening direction. In this case, for example, in Fig. 1, an annular flange (not shown) is provided on the outer circumference of the valve element portion 17A, and the position of the urging spring 7 is moved between the flange and the valve seat member 30A. In this case, when the upper end of the urging spring 7 comes into contact with the lower surface of the flange and the lower end of the urging spring 7 comes into contact with the upper surface of the valve seat member 30A, the valve element 17 is pushed upward and the valve shaft 41 is urged in the valve-opening direction. Then, the upper surface (the surface opposite to the valve port 16) of the thread of the male screw 41a is pressed against the lower surface (the surface on the valve port 16 side) of the thread of the female screw 6d formed on the inner periphery of the cylindrical small diameter portion 6a of the valve shaft holder 6.

Also in this case, no screw backlash is caused when the operating direction of the valve element 17 is switched, thereby preventing occurrence of hysteresis in the flow characteristics when the operating direction of the valve element 17 is switched.

In the above-described embodiment, the case in which the urging spring 7 functions as a so-called compression spring is described as an example, and the urging spring 7 may function as a so-called tension spring. In this case, the urging spring 7 acts in the valve-opening direction to draw the valve shaft holder 6 and the valve element 17, and pushes up the valve element 17 toward the cylindrical portion 53 (the side opposite to the valve port 16).

When the valve guide 18 is lifted upward in conjunction with the valve element 17, the entire valve shaft 41 moves upward and the upper surface of the thread of the male screw 41a is pressed against the lower surface of the thread of the female screw 6d formed on the inner circumference of the cylindrical small diameter portion 6a of the valve shaft holder 6. In this case, the structure of the motor-operated valve 2 needs to be configured so that the valve shaft 41 can be moved upward in conjunction with the valve guide 18.

Also in this case, the screw backlash can be reduced to prevent occurrence of hysteresis in the flow characteristics.

Reference Signs List

| | |
|---|---|
| 2 | motor-operated valve |
| 4 | rotor |
| 6 | valve shaft holder |
| 6d | female screw |
| 6h | through hole |
| 6j | step |
| 7 | urging spring |
| 11 | valve chamber |
| 16 | valve port |
| 17 | valve element |
| 17A | valve element portion |
| 17B | valve element holding portion |
| 17f | flange |
| 17g | annular projection surface |
| 18 | valve guide |
| 18a | through hole |
| 21 | ceiling portion |
| 28 | back pressure chamber |
| 41 | valve shaft |
| 41a | male screw |
| 48 | sealing member |
| 72 | valve element guide member |

**Claims**

**1.** A motor-operated valve (2) comprising:

a cylindrical cup-shaped casing (60) made of a non-magnetic material;
a valve body (30) having a valve chamber (11) therein integrally connected to a lower side of an opening side of the casing (60);
a valve seat member (30A) having a valve port (16), wherein the valve seat member (30A) is incorporated in a lower inner side of the valve body (30);
a first pipe fitting (12) configured to communicate with the valve chamber (11) and fixedly attached to the valve body (30) ;
a second pipe fitting (15) configured to communicate with the valve chamber (11) via the valve port (16) and fixedly attached to the valve seat member (30A);
a rotatable rotor (4) housed in an inner periphery of the casing (60);
a valve shaft (41) arranged in a shaft core portion of the rotor (4), a bush member (33), the valve shaft (41) being coupled to the rotor (4) by the bush member (33), wherein the valve shaft (41) is configured to move integrally with the rotor (4) in the vertical direction while rotating, and wherein a male screw (41a) is formed on an outer peripheral surface of the valve shaft (41);

a valve shaft holder (6) that is fixed, below the bush member, in a non-rotatable manner relatively to the valve body (30), wherein a female screw (6d) is formed on the inner periphery of the valve shaft holder (6), and threads with the male screw (41a);
a valve element (17) that moves in the axial direction based on linear motion of the valve shaft (41);
a valve element guide member (72) configured to guide the movement of the valve element (17) in the axial direction, wherein the valve element guide member (72) is arranged inside the valve body (30); and
a sealing member (48) interposed between the valve element (17) and the valve element guide member (72);
**characterized in that** the motor-operated valve (2) further comprises:

a back pressure chamber (28) provided above the valve element (17) and to which pressure in the valve port (16) is introduced via equalizing passages (17b, 17c) formed in the valve element (17), the equalizing passages comprising a longitudinal hole portion (17b) and a transverse conducting hole (17c); and
an urging spring (7) for urging the valve shaft (41) in an axial direction such that a surface of one side of a thread of the male screw (41a) formed on the outer periphery of the valve shaft (41) urged by the urging spring (7) is in contact with a surface on the other side of a thread of the female screw (6d) formed on the inner periphery of the valve shaft holder (6),
wherein the urging spring (7) is supported by the valve shaft holder (6) and the valve element (17) such that the urging spring (7) urges the valve element (17) in a direction to separate it from the valve holder (6), said direction being a valve-closing direction for pushing the valve element (17) towards the valve port (16).

**2.** The motor-operated valve (2) according to claim 1, wherein

the urging spring (7) urges the valve shaft (41) in the valve-closing direction of the valve element (17), and the surface of a thread formed on the valve shaft (41) urged by the urging spring (7) on the valve port side is in contact with the surface of a thread formed on the valve shaft holder (6) opposite to the valve port.

**3.** The motor-operated valve (2) according to claim 1 or 2, wherein
the spring load of the urging spring (7) is larger than the seal sliding resistance generated between the sealing member (48) and the inner peripheral surface of the valve element guide member (72) .

**4.** The motor-operated valve (2) according to claim 3, wherein
the spring load of the urging spring (7) when the valve element (17) is closed is larger than the sum of the seal sliding resistance and a force due to a fluid acting on the valve element (17) .

**5.** The motor-operated valve (2) according to any one of claims 1 to 4, wherein
the spring load of the urging spring (7) when the valve element (17) is fully opened is smaller than the driving thrust driving the valve shaft (41) by the rotational motion of the rotor (4) .

**6.** The motor-operated valve (2) according to any one of claims 1 to 5, comprising
an intermediate member which does not transmit the rotation of the valve shaft (41) due to the rotational motion of the rotor (4) to the urging spring (7).

**7.** The motor-operated valve (2) according to claim 6, wherein
the urging spring (7) is arranged at a position where one end portion is in contact with the valve element (17) and the other end portion is in contact with the valve shaft holder (6).

**8.** The motor-operated valve (2) according to claim 6, comprising

a valve guide (18) fixed to the valve element (17) and having a through hole for inserting the valve shaft (41) in a loosely penetrated state as the intermediate member, wherein
the urging spring (7) is arranged at a position where one end is in contact with the valve guide (18) and the other end is in contact with the valve shaft holder (6).

**9.** The motor-operated valve (2) according to claim 6, wherein
the urging spring (7) is arranged at a position where one end urges the valve shaft (41) via the intermediate member and the other end contacts the top surface of the casing (60) which covers the rotor (4).

**10.** The motor-operated valve (2) according to any one of claims 1 to 9, wherein

the sealing member (48) is formed using an annular packing having an L-shaped cross section.

**11.** The motor-operated valve (2) according to any one of claims 1 to 9, wherein
the sealing member (48) is formed by combining an O-ring and an annular packing having a C-shaped cross section.

## Patentansprüche

**1.** Motorbetriebenes Ventil (2), umfassend:

ein zylindrisches, schalenförmiges Gehäuse (60), welches aus einem nichtmagnetischen Material hergestellt ist;
einen Ventilkörper (30), welcher darin eine Ventilkammer (11) aufweist, welche mit einer unteren Seite einer sich öffnenden Seite des Gehäuses (60) in einem Stück verbunden ist;
ein Ventilsitzelement (30A), welches eine Ventilöffnung (16) aufweist, wobei das Ventilsitzelement (30A) in eine untere Innenseite des Ventilkörpers (30) integriert ist;
ein erstes Rohrformstück (12), welches konfiguriert ist, um mit der Ventilkammer (11) zu kommunizieren, und fest an dem Ventilkörper (30) befestigt ist;
ein zweites Rohrformstück (15), welches konfiguriert ist, um über die Ventilöffnung (16) mit der Ventilkammer (11) zu kommunizieren, und fest an dem Ventilsitzelement (30) befestigt ist;
einen drehbaren Rotor (4), welcher in einem Innenumfang des Gehäuses (60) untergebracht ist;
einen Ventilschaft (41), welcher in einem Schaftkernabschnitt des Rotors (4) angeordnet ist, ein Buchsenelement (33), wobei der Ventilschaft (41) durch das Buchsenelement (33) mit dem Rotor (4) gekoppelt ist, wobei der Ventilschaft (41) konfiguriert ist, um sich während des Drehens in einem Stück mit dem Rotor (4) in der vertikalen Richtung zu bewegen, und wobei eine Schraubenspindel (41a) auf einer Außenumfangsseite des Ventilschafts (41) gebildet ist;
einen Ventilschafthalter (6), welcher unter dem Buchsenelement auf nicht drehbare Weise in Bezug zu dem Ventilkörper (30) fixiert ist, wobei eine Hohlschraube (6d) auf dem Innenumfang des Ventilschafthalters (6) gebildet wird und mit der Schraubenspindel (41a) in Eingriff steht;
ein Ventilelement (17), welches sich basierend auf linearer Bewegung des Ventilschafts (41a) in der axialer Richtung bewegt;
ein Ventilelementführungsglied (72), welches konfiguriert ist, um die Bewegung des Ventilelements (17) in der axialen Richtung zu führen, wobei das Ventilelementführungsglied (72) innerhalb des Ventilkörpers (30) angeordnet ist; und
ein Dichtungsglied (48), welches zwischen dem Ventilelement (17) und dem Ventilelementführungsglied (72) eingefügt ist;
**dadurch gekennzeichnet, dass** das motorbetriebene Ventil (2) weiter umfasst:

eine Gegendruckkammer (28), welche über dem Ventilelement (17) bereitgestellt ist, und in welche Druck in der Ventilöffnung (16) über in dem Ventilelement (17) gebildete Ausgleichsdurchgänge (17b, 17c) eingeführt wird, wobei die Ausgleichsdurchgänge einen längslaufenden Lochabschnitt (17b) und ein querlaufendes Leitloch (17c) umfassen; und
eine Drängfeder (7) zum Drängen des Ventilschafts (41) in eine axiale Richtung, sodass eine Oberfläche von einer Seite eines Gewindes der Schraubenspindel (41a), welches am Außenumfang des Ventilschafts (41) gebildet ist, durch Drängen der Drängfeder (7) in Kontakt mit einer Oberfläche auf der anderen Seite eines Gewindes der Hohlschraube (6d) steht, welches am Innenumfang des Ventilschafthalters (6) gebildet ist,
wobei die Drängfeder (7) durch den Ventilschafthalter (6) und das Ventilelement (17) gestützt wird, sodass die Drängfeder (7) das Ventilelement (17) in eine Richtung drängt, um es von dem Ventilhalter (6) zu trennen, wobei die Richtung eine das Ventil schließende Richtung ist, um das Ventilelement (17) hin zu der Ventilöffnung (16) zu drücken.

**2.** Motorbetriebenes Ventil (2) nach Anspruch 1, wobei

die Drängfeder (7) den Ventilschaft (41) in die das Ventil schließende Richtung des Ventilelements (17) drängt, und
die Oberfläche eines Gewindes, welches auf dem Ventilschaft (41) gebildet ist, durch Drängen der Drängfeder (7) auf der Seite der Ventilöffnung in Kontakt mit der Oberfläche eines Gewindes steht, welches auf dem Ventilschafthalter (6) gegenüber der Ventilöffnung gebildet ist.

**3.** Motorbetriebenes Ventil (2) nach Anspruch 1 oder 2, wobei
die Federbelastung der Drängfeder (7) größer ist als der Dichtungsgleitwiderstand, welcher zwischen dem Dichtungsglied (48) und der Innenumfangsfläche des Ventilelementführungsglieds (72) erzeugt wird.

**4.** Motorbetriebenes Ventil (2) nach Anspruch 3, wobei
die Federbelastung der Drängfeder (7), wenn das Ventilelement (17) geschlossen ist, größer ist als die Summe des Dichtungsgleitwiderstands und einer Kraft aufgrund einer auf das Ventilelement (17) einwirkenden Flüssigkeit.

**5.** Motorbetriebenes Ventil (2) nach einem der Ansprüche 1 bis 4, wobei
die Federbelastung der Drängfeder (7), wenn das Ventilelement (17) vollständig geöffnet ist, kleiner ist als die Schubkraft, welche durch die Drehbewegung des Rotors (4) den Ventilschaft (41) antreibt.

**6.** Motorbetriebenes Ventil (2) nach einem der Ansprüche 1 bis 5, umfassend:
ein Zwischenglied, welches die Drehung des Ventilschafts (41) aufgrund der Drehbewegung des Rotors (4) nicht auf die Drängfeder (7) überträgt.

**7.** Motorbetriebenes Ventil (2) nach Anspruch 6, wobei
die Drängfeder (7) an einer Position angeordnet ist, wo ein Endabschnitt in Kontakt mit dem Ventilelement (17) steht und der andere Endabschnitt in Kontakt mit dem Ventilschafthalter (6) steht.

**8.** Motorbetriebenes Ventil (2) nach Anspruch 6, umfassend

eine Ventilführung (18), welche an dem Ventilelement (17) fixiert ist und ein Durchgangsloch zum Einführen des Ventilschafts (41) in einem lose durchdringenden Zustand als das Zwischenglied aufweist, wobei
die Drängfeder (7) an einer Position angeordnet ist, wo ein Ende in Kontakt mit der Ventilführung (18) steht und das andere Ende in Kontakt mit dem Ventilschafthalter (6) steht.

**9.** Motorbetriebenes Ventil (2) nach Anspruch 6, wobei
die Drängfeder (7) an einer Position angeordnet ist, wo ein Ende den Ventilschaft (41) über das Zwischenglied drängt und das andere Ende die obere Oberfläche des Gehäuses (60) berührt, welches den Rotor (4) bedeckt.

**10.** Motorbetriebenes Ventil (2) nach einem der Ansprüche 1 bis 9, wobei
das Dichtungsglied (48) unter Verwendung einer ringförmigen Manschette mit einem L-förmigen Querschnitt gebildet ist.

**11.** Motorbetriebenes Ventil (2) nach einem der Ansprüche 1 bis 9, wobei
das Dichtungsglied (48) durch Kombinieren eines O-Rings und einer ringförmigen Manschette gebildet ist, die einen C-förmigen Querschnitt aufweist.

**Revendications**

**1.** Soupape motorisée (2) comprenant :

un carter cylindrique cupuliforme (60) composé d'un matériau non magnétique ;
un corps de soupape (30) présentant une chambre de soupape (11) reliée d'un seul tenant à l'intérieur de celle-ci à un côté inférieur d'un côté d'ouverture du carter (60) ;
un organe de siège de soupape (30A) présentant un orifice de soupape (16), dans laquelle l'organe de siège de soupape (30A) est incorporé dans un côté interne inférieur du corps de soupape (30) ;
un premier raccord de tuyau (12) configuré pour communiquer avec la chambre de soupape (11) et attaché à demeure au corps de soupape (30) ;
un second raccord de tuyau (15) configuré pour communiquer avec la chambre de soupape (11) par le biais de l'orifice de soupape (16) et attaché à demeure à l'organe de siège de soupape (30A) ;
un rotor rotatif (4) logé dans une périphérie interne du carter (60) ;
un arbre de soupape (41) agencé dans une partie de coeur d'arbre du rotor (4), un organe de manchon (33), l'arbre de soupape (41) étant couplé au rotor (4) par l'organe de manchon (33), dans laquelle l'arbre de soupape (41) est configuré pour se déplacer d'un seul tenant avec le rotor (4) dans la direction verticale tout en tournant, et dans laquelle une vis mâle (41a) est formée sur une surface périphérique externe de l'arbre de soupape (41) ;

un support d'arbre de soupape (6) qui est fixé, en dessous de l'organe de manchon, d'une manière non rotative par rapport au corps de soupape (30), dans laquelle une vis femelle (6d) est formée sur la périphérie interne du support d'arbre de soupape (6), et se filète avec la vis mâle (41a) ;
un élément de soupape (17) qui se déplace dans la direction axiale sur la base d'un mouvement linéaire de l'arbre de soupape (41) ;
un organe de guidage d'élément de soupape' (72) configuré pour guider le déplacement de l'élément de soupape (17) dans la direction axiale, dans laquelle l'organe de guidage d'élément de soupape (72) est agencé à l'intérieur du corps de soupape (30) ; et
un organe d'étanchéité (48) intercalé entre l'élément de soupape (17) et l'organe de guidage d'élément de soupape (72) ;
**caractérisée en ce que** la soupape motorisée (2) comprend en outre :

une chambre de contre-pression (28) disposée au-dessus de l'élément de soupape (17) et dans laquelle une pression dans l'orifice de soupape (16) est introduite par le biais de passages d'équilibrage (17b, 17c) formés dans l'élément de soupape (17), les passages d'équilibrage comprenant une partie de trou longitudinale (17b) et un trou de conduction transversal (17c) ; et
un ressort de sollicitation (7) pour solliciter l'arbre de soupape (41) dans une direction axiale de telle sorte qu'une surface d'un côté d'un filetage de la vis mâle (41a) formé sur la périphérie externe de l'arbre de soupape (41) sollicité par le ressort de sollicitation (7) soit en contact avec une surface sur l'autre côté d'un filetage de la vis femelle (6d) formé sur la périphérie interne du support d'arbre de soupape (6),
dans laquelle le ressort de sollicitation (7) est supporté par le support d'arbre de soupape (6) et l'élément de soupape (17) de telle sorte que le ressort de sollicitation (7) sollicite l'élément de soupape (17) dans une direction pour le séparer du support de soupape (6), ladite direction étant une direction de fermeture de soupape pour pousser l'élément de soupape (17) vers l'orifice de soupape (16).

**2.** Soupape motorisée (2) selon la revendication 1, dans laquelle

le ressort de sollicitation (7) sollicite l'arbre de soupape (41) dans la direction de fermeture de soupape de l'élément de soupape (17), et
la surface d'un filetage formé sur l'arbre de soupape (41) sollicité par le ressort de sollicitation (7) sur le côté d'orifice de soupape est en contact avec la surface d'un filetage formé sur le support d'arbre de soupape (6) à l'opposé de l'orifice de soupape.

**3.** Soupape motorisée (2) selon la revendication 1 ou 2, dans laquelle
la charge de ressort du ressort de sollicitation (7) est plus grande que la résistance de glissement de joint générée entre l'organe d'étanchéité (48) et la surface périphérique interne de l'organe de guidage d'élément de soupape (72).

**4.** Soupape motorisée (2) selon la revendication 3, dans laquelle
la charge de ressort du ressort de sollicitation (7) lorsque l'élément de soupape (17) .est fermé est plus grande que la somme de la résistance de glissement de scellement et d'une force sous l'effet d'un fluide agissant sur l'élément de soupape (17).

**5.** Soupape motorisée (2) selon l'une quelconque des revendications 1 à 4, dans laquelle
la charge de ressort du ressort de sollicitation (7) lorsque l'élément de soupape (17) est complètement ouvert, est plus petite que la poussée d'entraînement entraînant l'arbre de soupape (41) par le mouvement rotationnel du rotor (4).

**6.** Soupape motorisée (2) selon l'une quelconque des revendications 1 à 5, comprenant
un organe intermédiaire qui ne transmet pas la rotation de l'arbre de soupape (41) sous l'effet du mouvement rotationnel du rotor (4) au ressort de sollicitation (7).

**7.** Soupape motorisée (2) selon la revendication 6, dans laquelle
le ressort de sollicitation (7) est agencé à une position à laquelle une partie d'extrémité est en contact avec l'élément de soupape (17) et l'autre partie d'extrémité est en contact avec le support d'arbre de soupape (6).

**8.** Soupape motorisée (2) selon la revendication 6, comprenant

un guide de soupape (18) fixé à l'élément de soupape (17) et comportant un trou traversant pour insérer l'arbre de soupape (41) dans un état de pénétration de manière lâche en tant que l'organe intermédiaire, dans laquelle le ressort de sollicitation (7) est agencé à une position à laquelle une extrémité est en contact avec le guide de soupape (18) et l'autre extrémité est en contact avec le support d'arbre de soupape (6).

**9.** Soupape motorisée (2) selon la revendication 6, dans laquelle le ressort de sollicitation (7) est agencé à une position à laquelle une extrémité sollicite l'arbre de soupape (41) par le biais de l'organe intermédiaire et l'autre extrémité vient en contact avec la surface supérieure du carter (60) qui recouvre le rotor (4).

**10.** Soupape motorisée (2) selon l'une quelconque des revendications 1 à 9, dans laquelle l'organe d'étanchéité (48) est formé à l'aide d'une garniture annulaire présentant une coupe transversale en forme de L.

**11.** Soupape motorisée (2) selon l'une quelconque des revendications 1 à 9, dans laquelle l'organe d'étanchéité (48) est formé en combinant un joint torique et une garniture annulaire présentant une coupe transversale en forme de C.

Fig. 1

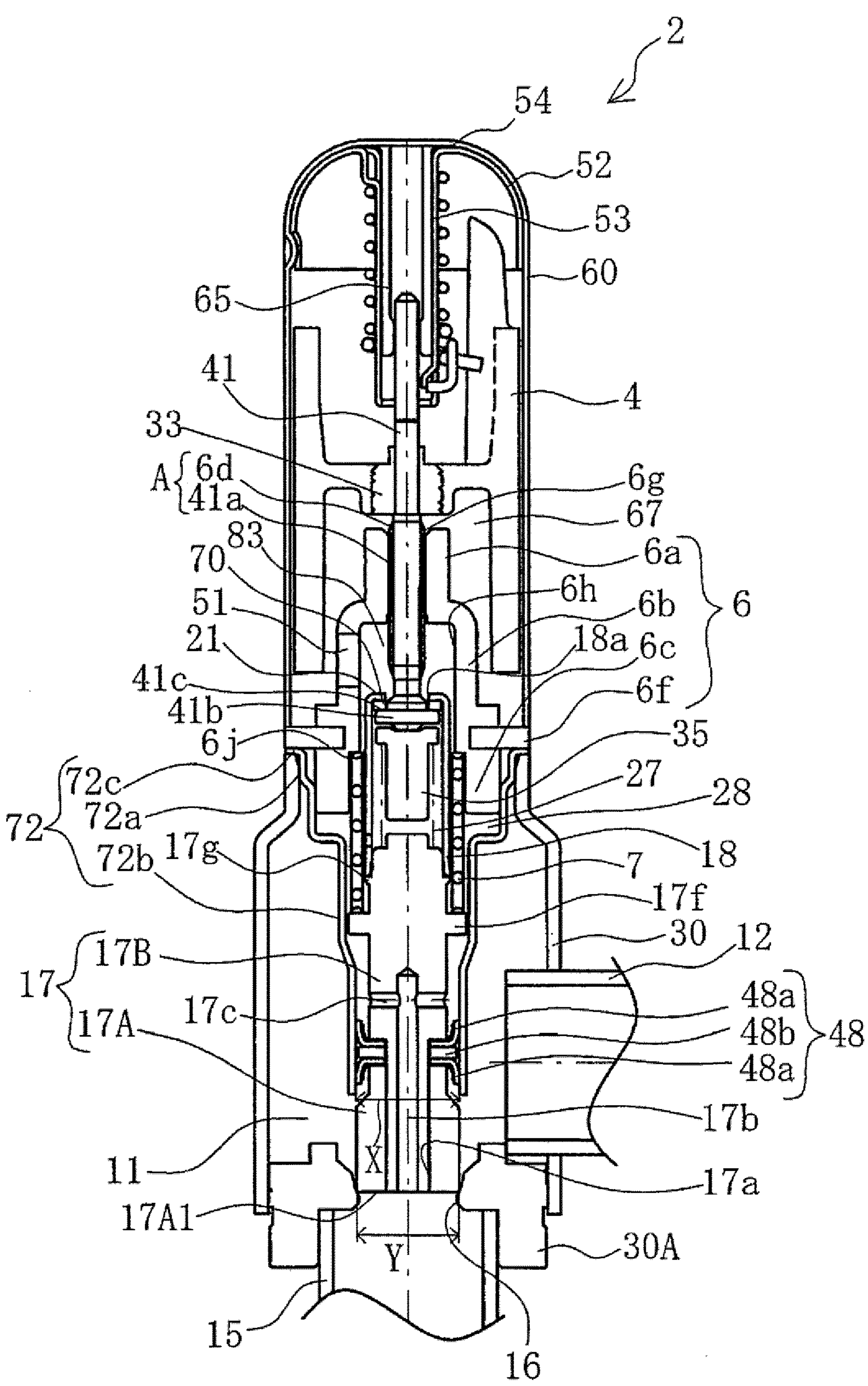
2
54
52
53
60
65
41
4
33
A
6d
41a
6g
67
83
70
6a
51
6h
6b
6
21
18a
6c
41c
6f
41b
6j
35
72c
27
72
72a
28
72b
17g
18
7
17f
30
12
17B
17
48a
17c
48b
48
17A
48a
17b
11
X
17a
17A1
Y
30A
15
16

Fig. 2

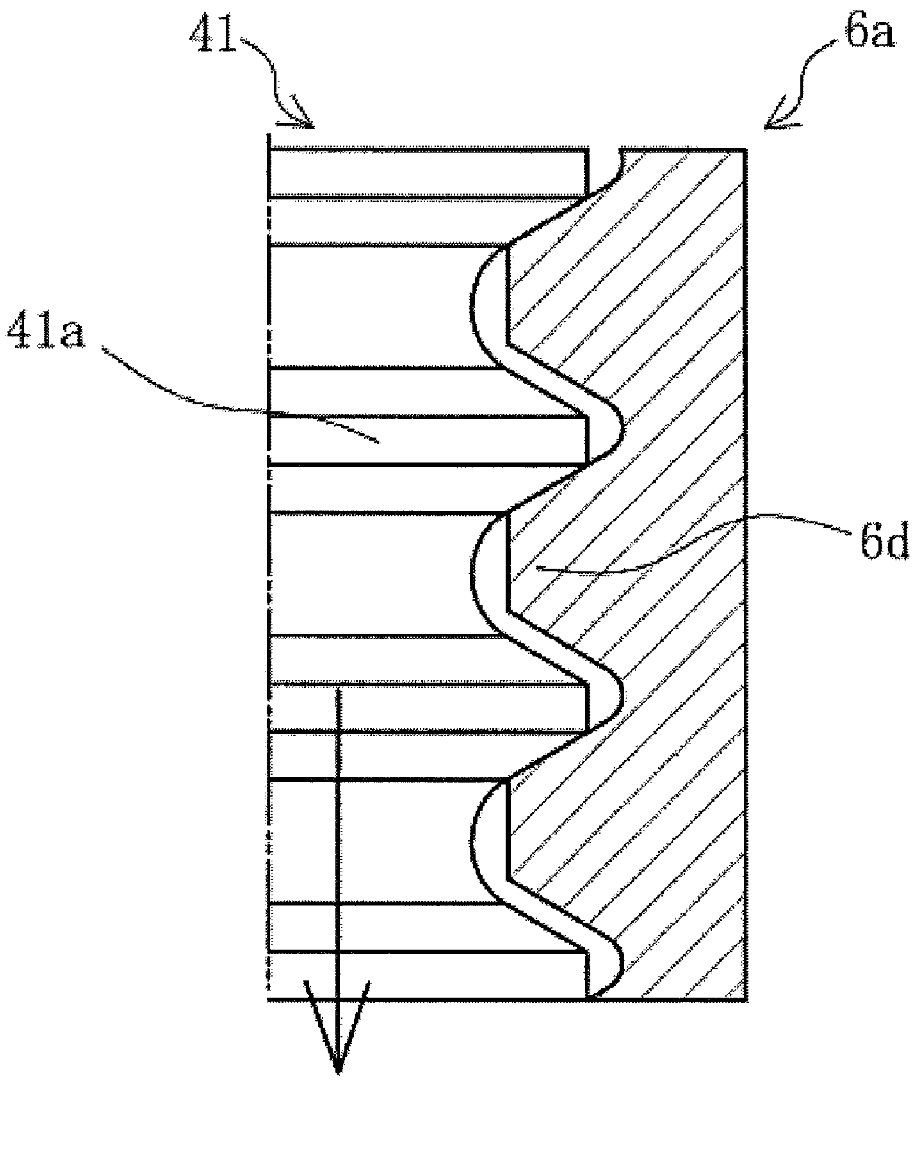

Fig. 3

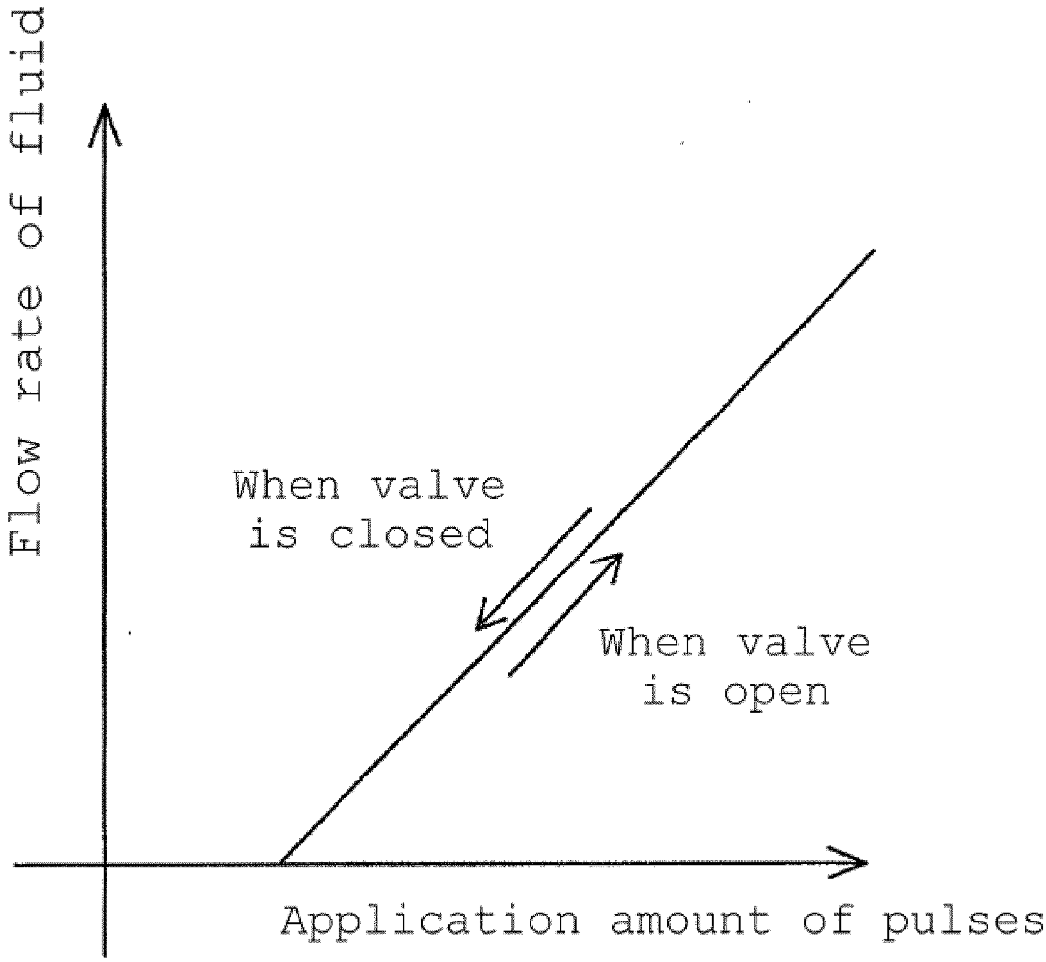
Flow rate of fluid
When valve
is closed
When valve
is open
Application amount of pulses

Fig. 4

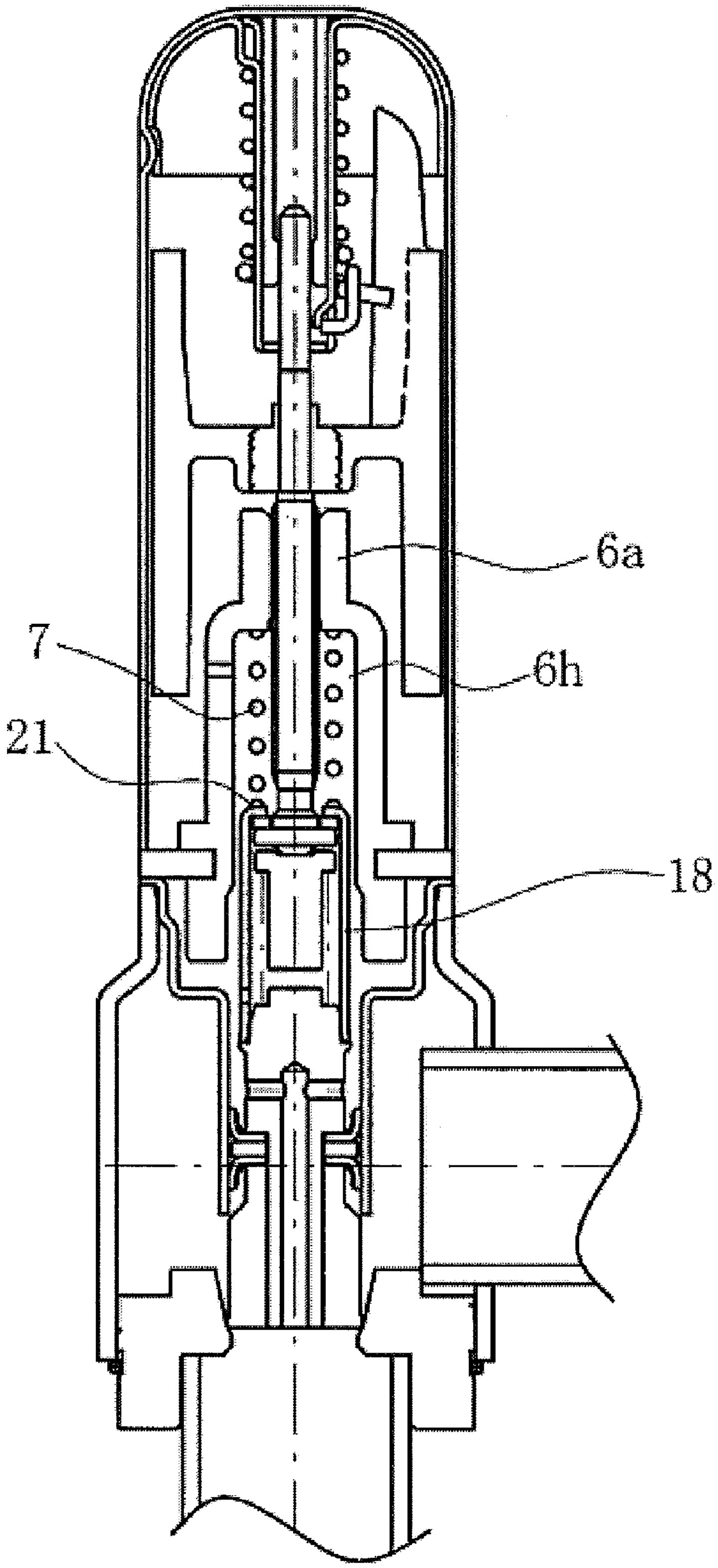

Fig. 5

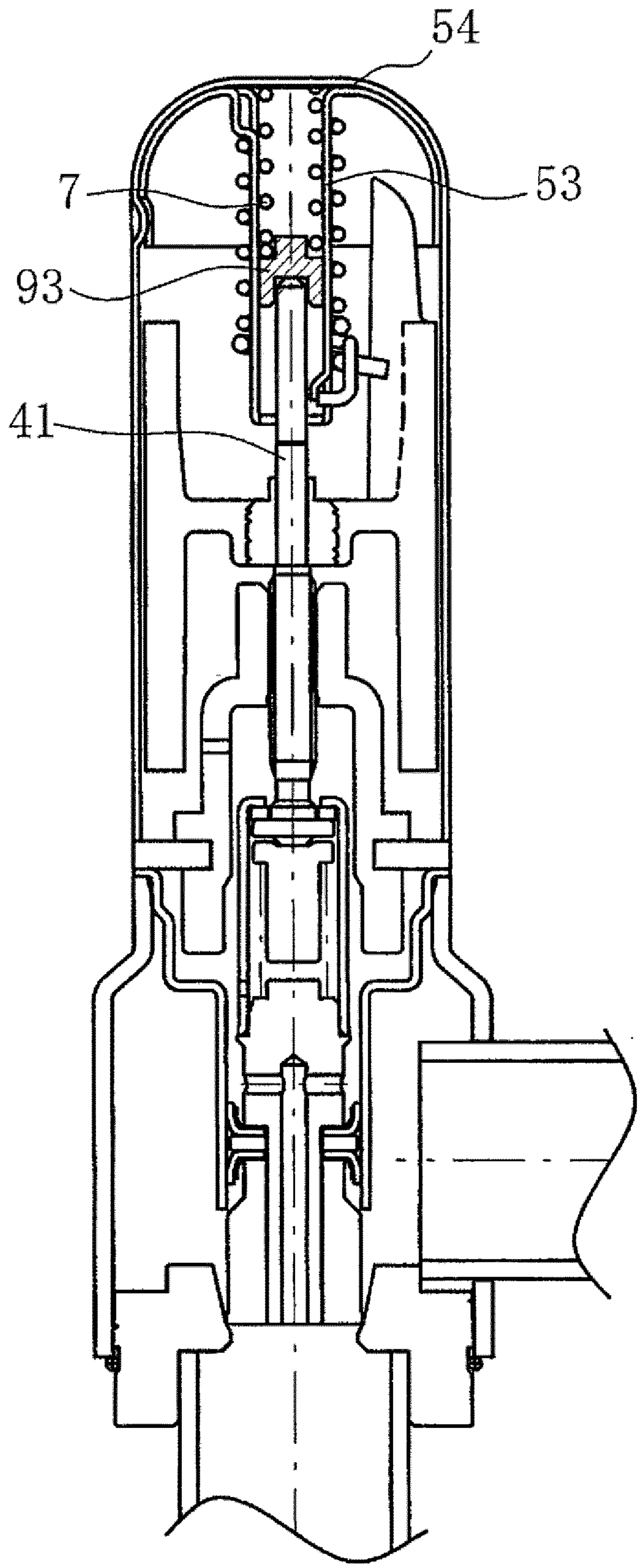

Fig. 6

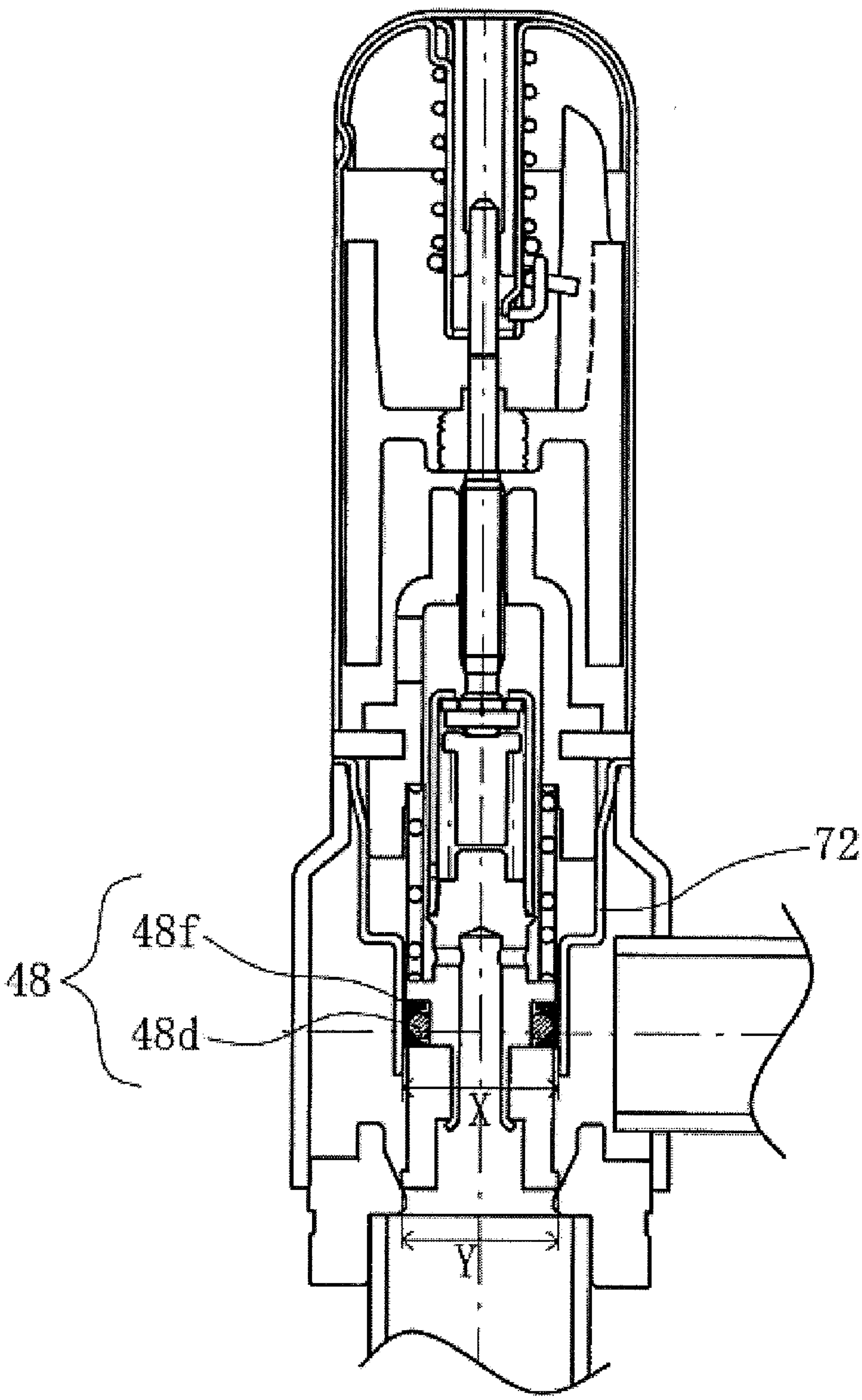

Fig. 7

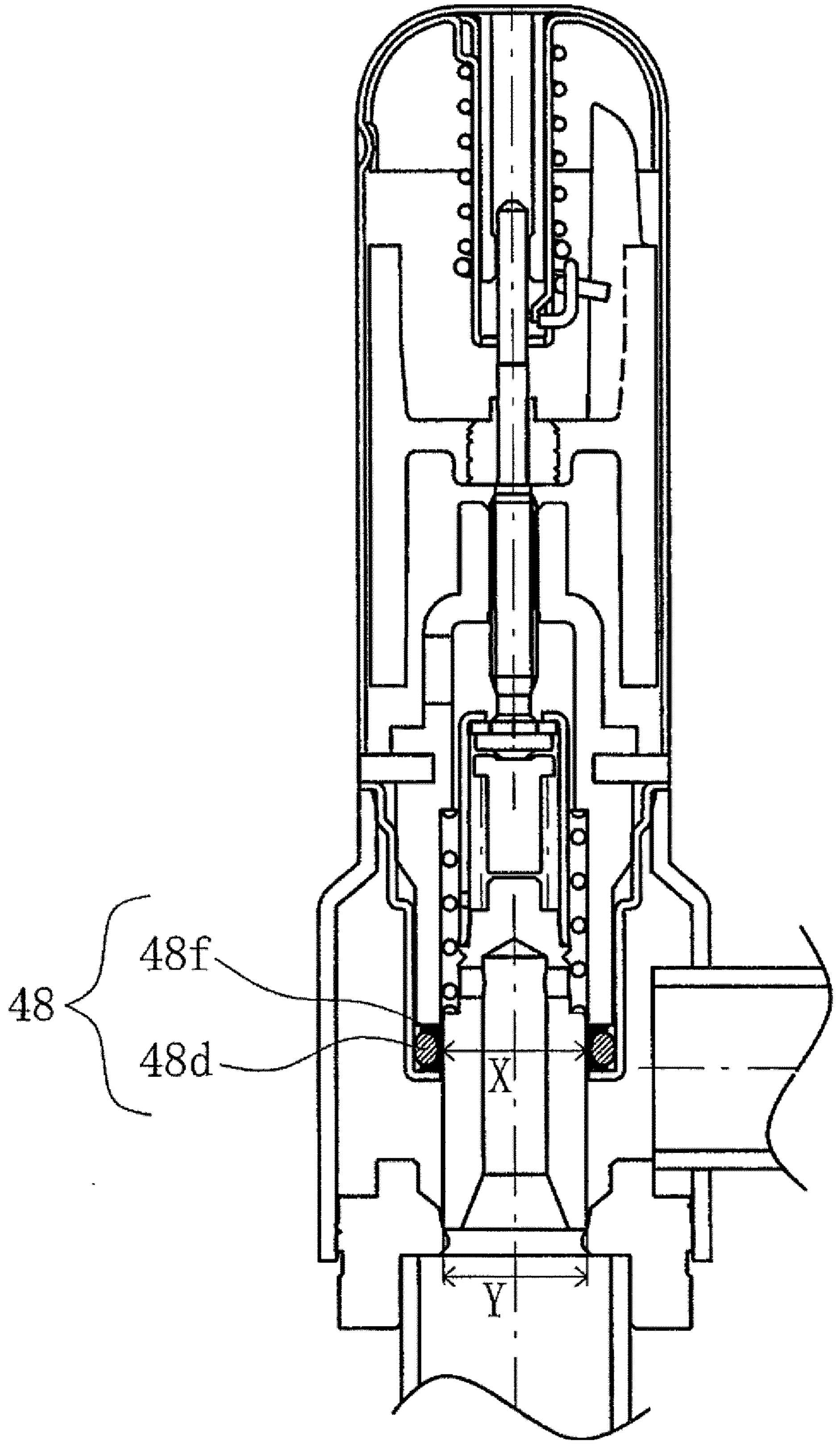

Fig. 8

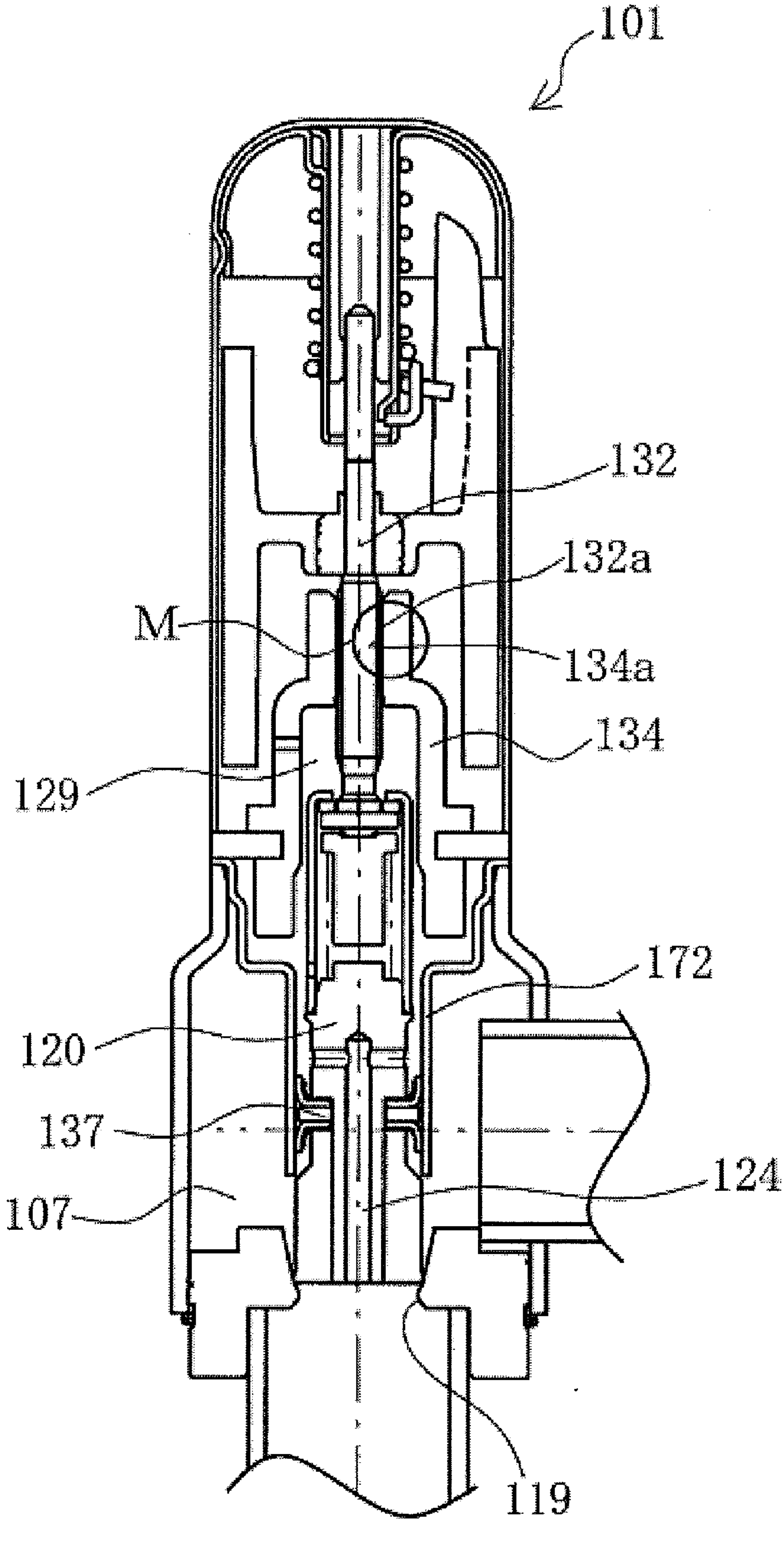

Fig. 9

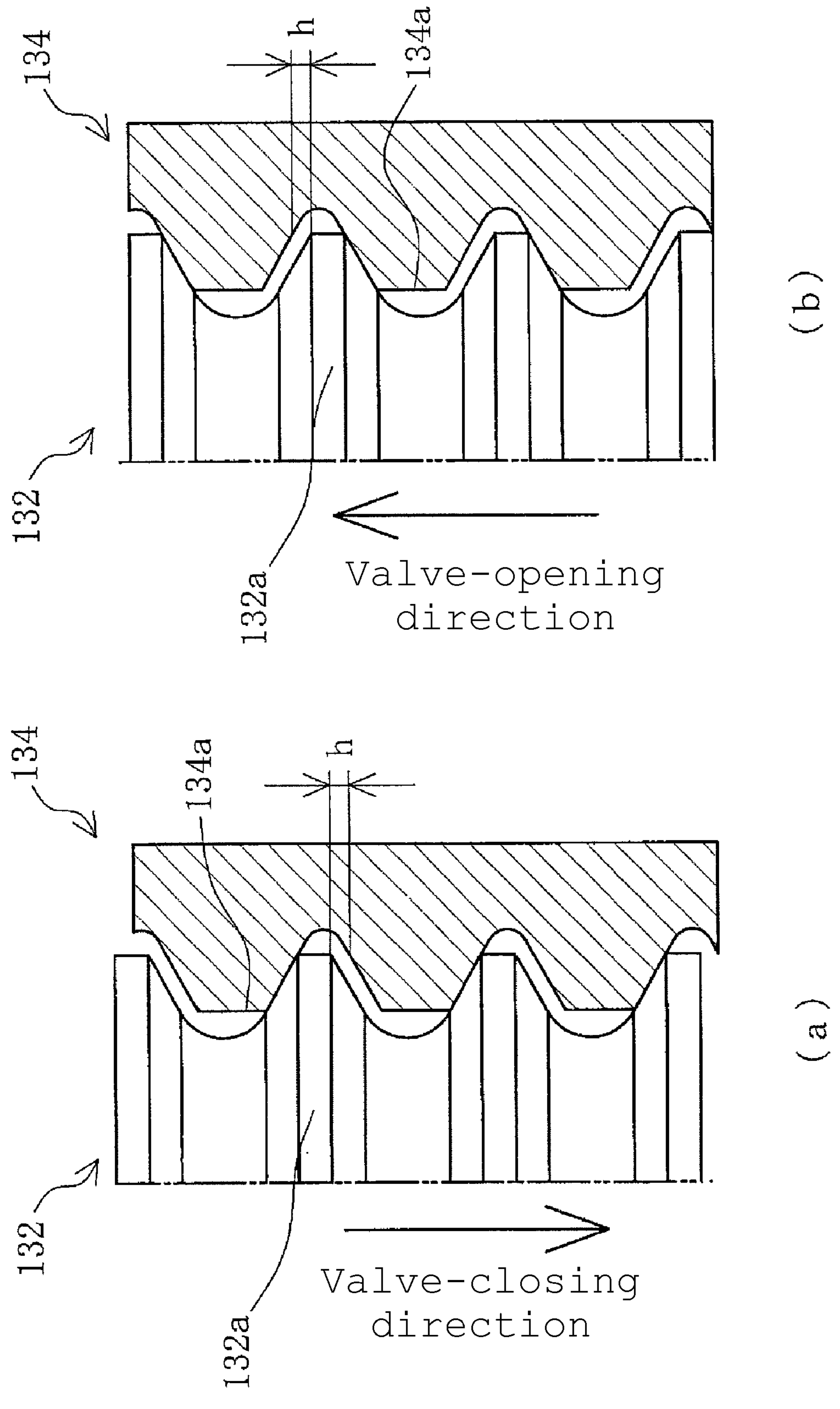
134
h
134a
132
132a
Valve-opening direction
(b)
134
134a
h
132
132a
Valve-closing direction
(a)

Fig. 10

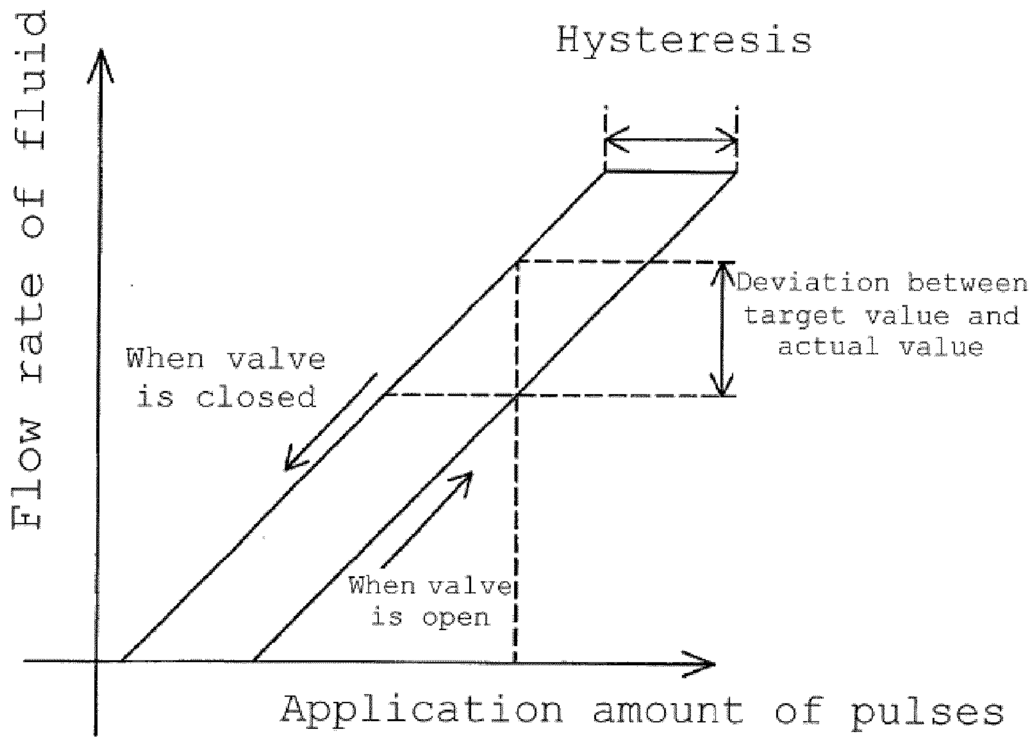
Hysteresis
Flow rate of fluid
Deviation between target value and actual value
When valve is closed
When valve is open
Application amount of pulses

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016080115 A
- US 2013206851 A1